# EUROPÄISCHE PATENTSCHRIFT

(11) **EP 1 691 099 B1**
(45) Veröffentlichungstag und Bekanntmachung des Hinweises auf die Patenterteilung: **10.09.2008**
(21) Anmeldenummer: 05100999.1
(22) Anmeldetag: 11.02.2005
(51) Int. Cl.: F16D 3/28

(54) **Axiale Isolierung für ein kardanisches Kreuzgelenk**
Axial insulation for a crosspiece of a universal joint
Isolement axial pour un croissillon d'un joint universel

(43) Veröffentlichungstag der Anmeldung: 16.08.2006
(73) Patentinhaber: Ford Global Technologies, LLC, Dearborn, MI 48126 (US)
(72) Erfinder: Gross, Norbert, D- 40221 Düsseldorf (DE)
(74) Vertreter: Drömer, Hans-Carsten

(56) Entgegenhaltungen:
- EP-B- 0 563 940
- WO-A-01/51823
- US-A- 1 702 363
- US-A- 4 121 437
- US-A- 5 551 919

## Beschreibung

Die Erfindung betrifft ein Kardangelenk, das zwei Gelenkgabeln aufweist, wobei eine der Gelenkgabeln mit einer angetriebenen Welle bzw. Antriebswelle und die andere Gelenkgabel mit einer anzutreibenden Welle bzw. Abtriebswelle verbindbar bzw. verbunden ist, und wobei die beiden Gelenkgabeln um 90° radial verdreht zueinander angeordnet sind, so daß die beiden Gelenkgabeln einen Innenraum bilden, wobei dem Kardangelenk ein elastisches Kupplungselement zugeordnet ist.

Kardangelenke werden üblicherweise verwendet, wenn zwei drehmomentübertragende Wellen, deren fluchtende Ausrichtung nicht immer gewährleistet ist, miteinander verbunden werden sollen. Das Kardangelenk besteht dabei üblicherweise aus zwei einander gegenüberliegenden, um 90° gegeneinander versetzten Gelenkgabeln, die jeweils ein Ende der zwei gelenkig miteinander zu verbindenden Wellen darstellen. Zwischen den Gelenkgabeln ist ein Gelenkkreuz angeordnet, das aus zwei um 90° gegeneinander versetzten Zapfenträgern besteht, wobei das Gelenkkreuz einstückig hergestellt ist, so daß die beiden Zapfenträger starr miteinander verbunden sind. Die Zapfenträger sind dabei jeweils in den beiden Gelenkgabeln um ihre Achse drehbar gelagert.

Bei der Übertragung von Antriebskräften, ist der Fachmann regelmäßig vor die Aufgabe gestellt, zwar die Drehbewegung zu übertragen, Schwingungen und Stöße aber bei der Übertragung möglichst zu eliminieren. Derartige Störungen können beispielsweise durch Schwingungen von der Antriebseinheit hervorgerufen werden. Dieses Problem macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges bzw. in der Lenksäule, wo bei Verwendung herkömmlicher Kardangelenke keinerlei Isolierung gegen durch Fahrbahnunebenheiten aufgezwungene niederfrequente Schwingungen bzw. Stöße erfolgt, bemerkbar. Derartige Störungen können einerseits zu Schädigungen im Antriebsstrang bzw. der Lenksäule und/oder zu akustischen oder mechanischen Beeinträchtigungen beim Fahrer führen.

Zum Zwecke akustischer oder schwingungsdynamischer Abkopplung, insbesondere in der Lenksäule ist es beispielsweise bekannt eine torsionselastische Kupplung mit einer so genannten Hardy-Scheibe, als axial elastisches Kupplungselement oder einer Schlingenscheibe zu verwenden. Die Hardy-Scheibe wird beispielsweise in der Lenksäule zwischen dem unteren Kardangelenk und einem Lenkgehäuse bzw. Lenkgetriebe oder zwischen den Kardangelenken angeordnet. Die in Drehrichtung steife Hardy-Scheibe ist derart ausgestaltet, daß diese in axialer Richtung der Lenksäule weich ist. Prinzipbedingt ist die Biegesteifigkeit der Hardyscheibe relativ gering Dies bewirkt eine Verzerrung der Hardy-Scheibe mit den Biegemomenten aus dem Kardangelenk, falls die Hardy-Scheibe wie üblich in Serie mit dem Kardangelenk angeordnet ist. Da eine Hardy-Scheibe allein (ohne Kardangelenk) zumindest bei entsprechenden Standzeiten nicht geeignet ist, nicht fluchtende Wellen zu verbinden, wird nachteilig die Anzahl der Bauteile mit der notwendigen Serienanordnung mit dem Kardangelenk erhöht. Darüber hinaus ist der axiale Bauraum dadurch erhöht, und die übliche Kompensation der Ungleichförmigkeiten mit zwei gegenphasig angeordneten kardanischen Gelenken wird durch die zusätzliche Hardy-Scheibe gestört, da sie in Serie placiert wie ein zusätzliches Gelenk wirkt.

Die EP 0 563 940 B1 betrifft ein Kreuzgelenk mit zwei einander gegenüberliegenden, um 90° gegeneinander versetzten Gabeln, die jeweils Bestandteil je einer von zwei gelenkig miteinander zu verbindenden Wellen sind, oder die jeweils mit je einem von zwei gelenkig miteinander zu verbindenden Wellenenden verbindbar sind. Das Kreuzgelenk weist zwei um 90° gegeneinander versetzte, ein Zapfenkreuz bildende Zapfenpaare auf, die in den jeweiligen Gabelenden um ihre Achse drehbar und, bezogen auf die Drehachse der Wellen, drehmomentübertragend gelagert sind. Die beiden Zapfenpaare sind in der durch das Zapfenkreuz gebildeten Ebene zumindest geringfügig gegeneinander verschwenkbar, wobei jeder Zapfen in einem Ankerbock gelagert ist. Einander benachbarte Ankerböcke sind durch ein elastisches Kupplungselement miteinander verbunden. Das elastische Kupplungselement enthält ortsfest angeordnete, schlingenförmige Verstärkungseinlagen, die jeweils zwei benachbarte Ankerböcke miteinander verbinden. Die schlingenförmigen Verstärkungseinlagen liegen entlang dem Umfang des Kreuzgelenkes in einer Schlingenebene, die senkrecht zur Ebene des Zapfenkreuzes ist.

Als ein Hauptnachteil des in der EP 0 563 940 B1 offenbarten Kreuzgelenkes ist anzusehen, daß die beiden Zapfenpaare unterschiedlich die eigenen Zapfen schlüssig miteinander verbindet: Das eine Paar verwendet einen durchgängigen Bolzen, das andere Paar ist konfiguriert aus zwei kurzen Zapfen, die durch ein zusätzliches Verbindungsstück miteinander verbunden werden. Hierdurch wird zur Herstellung eines jeden Zapfens bzw. Zapfenpaares ein unterschiedliches Herstellungswerkzeug benötigt, wodurch die Herstellung des Kreuzgelenkes äußerst kostenintensiv ist.

Nachteilig ist weiterhin, daß das in der EP 0 563 940 B1 offenbarte Kreuzgelenk in seiner Konstruktion sehr aufwendig und damit sehr störanfällig ist. Als Nachteil ist weiter anzusehen, daß die Gabeln in der Weite klein und deren Gabellager somit größer (teurer) ausgeführt werden müssen, um bei sinnvollen Baugrößen ein hinreichendes Drehmoment zu übertragen. Wird bei dem Kreuzgelenk der EP 0 563 940 B1 der flexible Ring beschädigt, muß ein Ersatzring radial über die Anker zugeführt werden. Darüber hinaus ist das Kreuzgelenk gerade bei schnell drehenden Wellen schwierig auszuwuchten.

In der US 4,850,933 ist eine flexible Verbindung zur Verbindung einer angetriebenen Welle mit einer anzutreibenden Welle offenbart. Die Verbindung umfaßt:
eine flexible Zentralscheibe, die eine winklige Ausrichtung ermöglicht,
eine Mehrzahl tragender Blattfedern, die eine parallele Ausrichtung ermöglichen, wobei die Blattfedern jeweils erste und zweite Enden aufweisen,
eine Antriebsplatte und eine angetriebene Platte,
ein erstes paar L-förmige Haltenasen, die mit gegenüberliegenden Seiten der angetriebenen Platte und mit dem ersten Ende des ersten Paares der Blattfedern verbunden sind,
ein zweites paar L-förmige Haltenasen, die mit gegenüberliegenden Seiten der anzutreibenden Platte und mit dem ersten Ende des zweiten Paares der Blattfedern verbunden sind,
Mitteln, die mit dem ersten Paar L-förmige Haltenasen verbunden, aber getrennt davon sind, zur Verbindung der zweiten Enden des ersten Paares der Blattfedern mit gegenüberliegenden Enden der flexiblen Zentralscheibe,
Mitteln, die mit dem ersten Paar L-förmige Haltenasen verbunden, aber getrennt davon sind, zur Verbindung der zweiten Enden des zweiten Paares der Blattfedern mit gegenüberliegenden Enden der flexiblen Zentralscheibe,
eine erste Verbindungsnabe, die mit der angetriebenen Platte verbunden ist, um die angetriebene Platte mit der Antriebswelle zu verbinden,
eine zweite Verbindungsnabe, die mit der anzutreibenden Platte verbunden ist, um die anzutreibenden Platte mit der anzutreibenden Welle zu verbinden.

Die EP 0 160 599 beschreibt eine elastische Kupplungseinheit mit einem ersten und einem zweiten Gabelgelenk zur Befestigung an jeweils einem treibenden Element und einem getriebenen Element. Die Gabelgelenke weisen derart angeordnete Schenkel auf, daß die Schenkel des ersten Gabelgelenks und des zweiten Gabelgelenks ineinander geschachtelt sind. An jedem Gabelgelenk ist eine Zierblende befestigt, wobei die Flächen dieser zwei Zierblenden nahezu senkrecht zur Drehachse der Einheit angeordnet sind, daß ein Verbindungselement aus Elastomer an diesen Zierblendenflächen befestigt ist. Jede Zierblende ist an dem jeweiligen Gabelgelenk mittels eines in mindestens eine Öffnung der Zierblende und in den Schenkeln des Gabelgelenks ausgesparte Ausnehmungen eingeführten Bolzens befestigt.

Die GB 942,495 offenbart eine Verbindung für Wellen. Die Verbindung weist eine flexible Scheibe mit Kupplungselemente auf, die jeweils an einer Seite der Scheibe angeordnet sind. Jedem Kupplungselement ist eine zu verbindende Welle zugeordnet. Die Kupplungselemente sind in einem rechten Winkel um die Scheibe gedreht, und liegen normal zur Scheibenachse. Während des Betriebes der Verbindung, kann eine winklige Ausrichtung der verbundenen Wellen angepaßt werden, in dem die Kupplungselemente gedreht werden, ohne das die Scheibe gebogen wird. Die Scheibe besteht ganz oder teilweise aus Plastik, Gummi oder ähnlichen elastischen Material, so daß dieses während der Verbindung biegefrei ist.

Als ein Hauptnachteil der in der GB 942,495 offenbarten Verbindung für Wellen ist anzusehen, daß die Kupplungselemente mit Spiel zur Scheibe und mit signifikanter Reibung gedreht werden, wobei das Verdrehspiel und die Reibung lediglich geringen Ansprüchen genügt.

Die US 5551919 A offenbart ein Kardangelenk gemäß dem Oberbegriff des Anspruchs 1.

Der Erfindung liegt die Aufgabe zugrunde, ein Kardangelenk der eingangs genannten Art mit einfachen Mitteln dahingehend zu verbessern, so daß dieses unter wirtschaftlichen Aspekten günstiger herstellbar ist, ohne daß das elastische Kupplungselement signifikante Biegemomente durchleiten muß.

Diese Aufgabe wird durch die Merkmale des Anspruchs 1 gelöst.

Durch die identische Ausgestaltung der beiden Verbindungselemente können die jeweiligen Verbindungselemente in einem einzigen Herstellungswerkzeug hergestellt bzw. bearbeitet werden. Damit wird ein Kardangelenk zur Verfügung gestellt, welches in der Herstellung aus wirtschaftlichen Gründen eindeutig günstiger herzustellen ist, denn die jeweiligen Verbindungselemente können mit lediglich einem einzigen Herstellungswerkzeug hergestellt bzw. bearbeitet werden, wodurch gleichzeitig Logistik- und Lagerhaltungskosten reduziert werden können, da eine getrennte Lagerung bzw. zur Verfügungsstellung beispielsweise just in time unterschiedlicher Zapfenträger entfallen kann.

Das erfindungsgemäße Kardangelenk eignet sich insbesondere zum Einsatz in einer Lenksäule eines Kraftfahrzeuges, wobei gegenüber einem herkömmlichen Kardangelenk axiale Stöße herausfiltbar sind. Dieses Verhalten ist besonders wünschenswert in Lenksäulenkonstruktionen, da axiale Stöße z. B. durch Straßenanregungen so von einem Lenkrad abgehalten werden können, ohne daß Einbußen hinsichtlich einer Drehsteifigkeit in Kauf genommen werden müssen. Durch die Integration der Elastizität durch das zweifach drehbar gelagerte elastische Kupplungselement in das Kardangelenk oder um dieses herum wird vermieden, daß neben einer axialen Nachgiebigkeit auch eine Biegesteifigkeit bereitgestellt werden muß. Mittels des erfindungsgemäßen Kardangelenkes kann die axiale Nachgiebigkeit größer ausgeführt werden, so daß auch Isolationseigenschaften gegenüber herkömmlichen elastischen Kupplungen in Lenksäulenkonstruktionen verbessert sind. Das integrierte elastische Kupplungselement muß keine signifikanten Biegemomente durchleiten, da das elastische Kupplungselement in der Achse der Momente durch Lager biegefrei gehalten ist. Dies ermöglicht eine ideale Nachgiebigkeitseigenschaft in axialer Richtung ohne Biegewiderstände mit optimaler Steifigkeit in Rotationsrichtung. Die große axiale Nachgiebigkeit des Gelenkes kann den Wegfall eines sonst üblichen Verschiebegelenkes in der Lenksäule, welches Einbautoleranzen und Straßenanregungen kompensieren muß, begünstigen. Weiter kann das erfindungsgemäße Kardangelenk, wenn mit einer Scheibe ausgeführt, mit vergleichsweise großen Gabelweiten und vorteilhaft mit entsprechend klein bemessenen Gabellagern in einer sinnvollen Baugröße hergestellt werden, wobei wesentlich höhere Drehmomente übertragbar sind, als bei einem Kardangelenk mit kleinen Gabelweiten und größeren (teureren) Gabellagern. Weiter erlaubt die erfindungsgemäße Integration des Ringes ein einfaches Zuführen des flexiblen Ringes in axialer Richtung.

Weitere vorteilhafte Ausgestaltungen der Erfindung sind in den Unteransprüchen und in der folgenden Figurenbeschreibung offenbart. Es zeigen:
- Fig. 1: Eine Seitenansicht eines Kardangelenks,
- Fig. 2: eine Darstellung entlang des Schnittes A aus Figur 1,
- Fig. 3: einen Längsschnitt eines Kardangelenks in einer zweiten Ausführung,
- Fig. 4: eine Darstellung entlang des Schnittes A aus Figur 3,
- Fig. 5: eine Seitenansicht eines Kardangelenks in einer dritten Ausführung,
- Fig. 6: eine Darstellung entlang des Schnittes A aus Figur 5,
- Fig. 7: eine Seitenansicht eines Kardangelenks in einer vierten Ausführung,
- Fig. 8: eine Darstellung entlang des Schnittes A aus Figur 7,
- Fig. 9: eine Seitenansicht eines Kardangelenks in einer fünften Ausführung,
- Fig. 10: eine Darstellung entlang des Schnittes A aus Figur 9,
- Fig. 11: eine Seitenansicht eines Kardangelenks in einer sechsten Ausführung, und
- Fig. 12: eine Darstellung entlang des Schnittes A aus Figur 11.

In den unterschiedlichen Figuren sind gleiche Teile stets mit demselben Bezugszeichen versehen, so daß diese in der Regel auch nur einmal beschrieben werden.

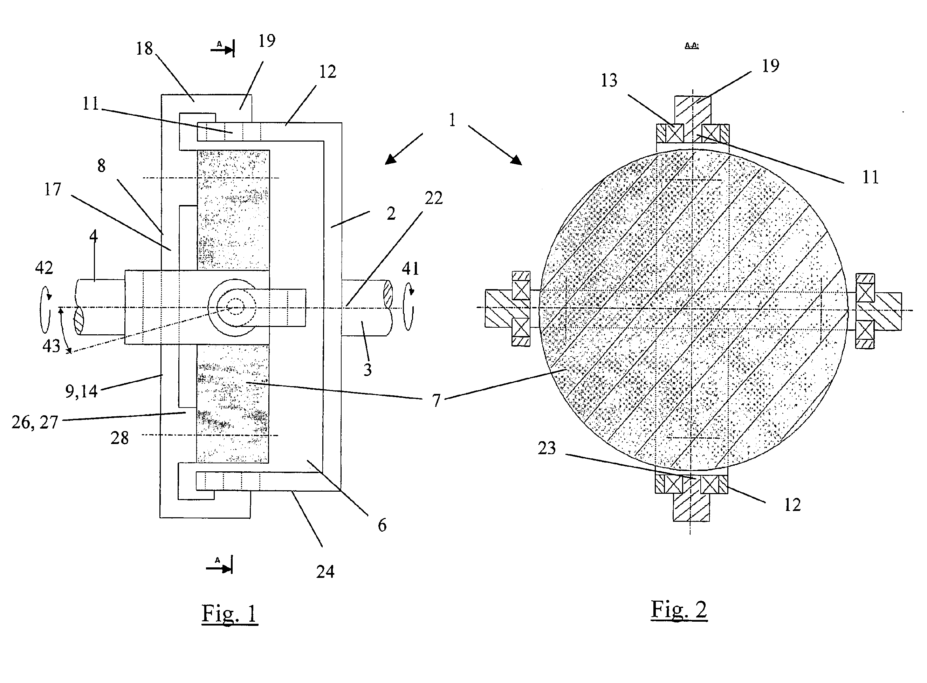

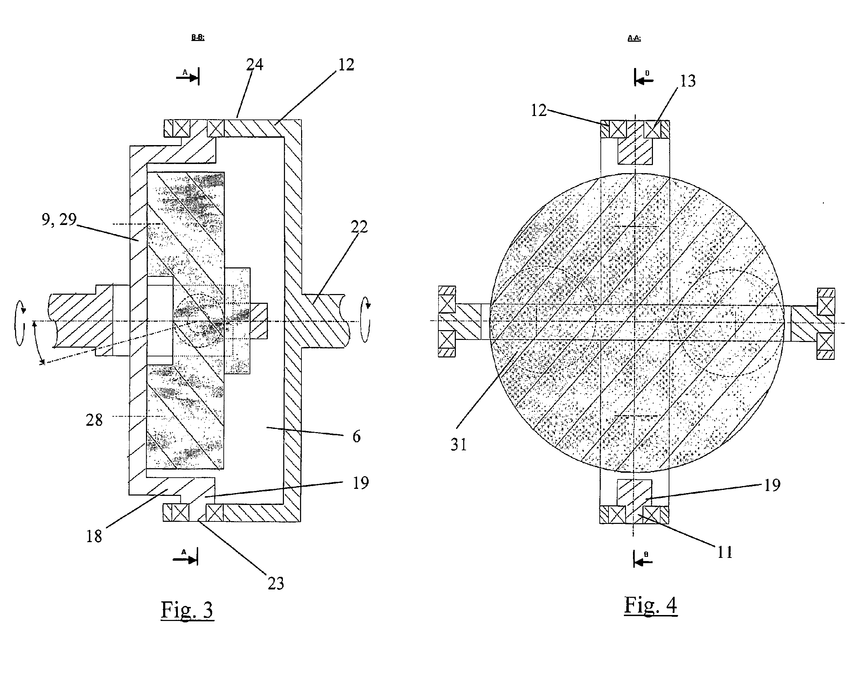

Die Figuren 1 bis 12 zeigen ein Kardangelenk 1, das zwei Gelenkgabeln 2 aufweist. Eine der Gelenkgabeln 2 ist mit einer angetriebenen Welle 3 bzw. Antriebswelle 3 verbunden, wobei die andere Gelenkgabel 2 mit einer anzutreibenden Welle 4 bzw. Abtriebswelle 4 verbunden ist. Die beiden Gelenkgabeln 2 sind um 90° radial verdreht zueinander angeordnet, so daß die beiden Gelenkgabeln 2 einen Innenraum 6 bilden. Dem Kardangelenk 1 ist ein elastisches Kupplungselement 7 zugeordnet. Den Gelenkgabeln 2 ist ein Verbindungselementenpaar 8 zugeordnet, das aus zwei einander identischen, räumlich getrennten Verbindungselementen 9 gebildet ist. Die Verbindungselemente 9 sind mit ihren jeweils daran angeordneten Zapfen 11 in den jeweils zugeordneten Gelenkgabeln 2 bzw. in deren Gabelschenkeln 12 in Lagern 13 drehbar gelagert. Die Verbindungselemente 9 sind über das elastische Kupplungselement 7 miteinander verbunden. Aufgrund der gewählten Seitenansicht in den Figuren 1, 5, 7, 9 und 11 bzw. aufgrund des gewählten Längsschnittes in Figur 3 ist jeweils nur eine Gelenkgabel 2 mit ihren beiden Gabelschenkeln 12 bzw. nur ein Verbindungselement 9 mit seinen beiden Querstegen 18 vollständig erkennbar.

Die Lager 13 in den Gabelschenkeln 12 sind als einreihige Lager mit einer radial ausgerichteten Drehachse z. B. als Wälzlager beispielsweise Nadel- oder Kugellager ausgeführt, können aber auch als Gleitlager ausgeführt sein. Zumindest eines der beiden Lager 13 pro Gelenkgabel 2 kann zusätzlich zu den axialen Gelenkkräften noch radiale Gelenkkräfte aufnehmen. Die Lager 13 werden geeignet radial zu einer Gelenkachse in den Gelenkgabeln 2 bzw. deren Gabelschenkeln 12 fixiert. Mögliche Ausführungsformen sind zum Beispiel Preßpassung, Klebung oder Formschluß (Schulteranlage, Springring oder dergleichen) der Lageraußenringe in den Gelenkgabeln 2 bzw. deren Gabelschenkeln 12.

In den Figuren 1 bis 6 sind die Verbindungselemente 9 als zusätzliche Verbindungsgabeln 14, 29, 32 ausgestaltet. Die Verbindungsgabeln 14, 29, 32 weisen einen Basissteg 17 und endseitig an diesem angeordnete Querschenkel 18 auf. Die Querschenkel 18 gehen in einen Zapfenabschnitt 19 über, der jeweils den Zapfen 11 trägt.

In dem in den Figuren 1 und 2 dargestellten Ausführungsbeispiel greifen die Zapfen 11 bezogen auf eine Gelenkmittelachse 22 jeweils gegensinnig in die zugeordneten Gabelschenkel 12 bzw. in die darin aufgenommenen Lager 13 ein. Die Zapfen 11 sind mit ihrem freien Ende 23 von einer dem Innenraum 6 gegenüberliegenden Außenseite 24 zum Innenraum 6 orientiert. Der Zapfenabschnitt 19 und somit der Zapfen 11 ist bezogen auf die Gelenkmittelachse 22 außenseitig an den Gelenkgabeln 2 bzw. deren Gabelschenkeln 12 angeordnet, wobei der Zapfenabschnitt 19 an einer zur Außenseite 24 weisenden Seite der Lager 13 anliegt. Die Verbindungsgabeln 14 sind in der Seitenansicht gesehen daher etwas größer als die Gelenkgabeln 2 bzw. die symmetrischen Gelenkgabeln 2, um diese mit ihrem Quersteg 18 zu umgreifen, so daß der Zapfen 11 von der Außenseite 24 in die Lager 13 eingreifen kann.

Der Basissteg 17 weist jeweils versetzt zur Gelenkmittelachse 22 aufgesetzte Verbindungsbereiche 26 zur Verbindung mit dem elastischen Kupplungselement 7 auf. Die Verbindungsbereiche 26 sind bezogen auf die Symmetrieachse 22 gleich beabstandet und erstrecken sich als Fortsätze 27 axial in Richtung zum Innenraum 6. Zwischen dem elastischen Kupplungselement 7 und dem jeweiligen Verbindungselement 9 bzw. der Mitte seines jeweiligen Querstegs 18 entsteht so ein axialer Zwischenraum, der eine axiale Freigängigkeit zur Verfügung stellt. Dieser axiale Zwischenraum kann auch durch materialmäßige Integration der Verbindungsbereiche 26 in das elastische Kupplungselement 7 (zum Beispiel wie in Figur 3 und 4 ausgeführt) einhergehend mit einer Vereinfachung der Querstege 18 der Verbindungselemente 9 vorgenommen werden.

Das elastische Kupplungselement 7 ist in dem in den Figuren 1 und 2 dargestellten Ausführungsbeispiel als Scheibe, bevorzugt als torsionssteife, biege-elastische bzw. axial elastische Scheibe, vorzugsweise als Hardy-Scheibe ausgestaltet und mit den Verbindungsbereichen 26 bzw. den Fortsätzen 27 in dem Innenraum 6 verbunden. Denkbar ist aber auch, daß das elastische Kupplungselement 7 in dem Ausführungsbeispiel nach den Figuren 1 und 2 als torsionssteifer, biege-elastischer bzw. axial elastischer Ring bzw. Kreisring ausgestaltet ist. Das elastische Kupplungselement 7 besteht zum Beispiel aus einem Gummi. Als Verbindung mit dem jeweiligen Verbindungselement 9 bzw. den an den Verbindungsgabeln 14 angeordneten Fortsätzen 27 kann beispielsweise eine Schraubverbindung, Nietverbindung, Vulkanisierung oder dergleichen vorgesehen sein. Die Verbindung ist in den Figuren 1 und 2 prinzipiell mittels einer strichpunktierten Linie 28 dargestellt.

Eine weitere Ausgestaltung des erfindungsgemäßen Kardangelenks 1 ist in den Figuren 3 und 4 dargestellt. Im Unterschied zu dem in den Figuren 1 und 2 beschriebenem Ausführungsbeispiel greifen die Zapfen 11 mit ihrem freien Ende 23 von dem Innenraum 6 zu der dem Innenraum 6 gegenüberliegenden Außenseite 24 orientiert in die Gabelschenkel 2 bzw. in die darin aufgenommenen Lager 13 ein, gleichwohl aber, bezogen auf die Symmetrieachse 22 gegensinnig.

Die Verbindungselemente 9 sind bei diesem Ausführungsbeispiel als zusätzliche Verbindungsgabeln 29 ausgestaltet. Die Verbindungsgabeln 29 weisen wie die Verbindungsgabel 14 des Ausführungsbeispiels nach den Figuren 1 und 2 den Basissteg 17 und endseitig an diesem angeordnete Querschenkel 18 auf. Die Querschenkel 18 gehen in den Zapfenabschnitt 19 über, der jeweils den Zapfen 11 trägt.

Die Verbindungsgabeln 29 sind mit ihrem Basissteg 17 kürzer ausgeführt als in der Ausführung nach Figur 1, weil sich der Quersteg 18 in den Innenraum 6 hinein erstreckt. Damit ist auch der Zapfenabschnitt 19 mit seinem Zapfen 11 in dem Innenraum 6 angeordnet, wobei der Zapfenabschnitt 19 an einer zum Innenraum 6 weisenden Seite der Lager 13 anliegt.

Damit die Verbindungsgabeln 29 mit ihrem Quersteg 18 bzw. dem Zapfenabschnitt 19 mit dem Zapfen 11 von innen in das Lager 13 eingreifen können, sind die Verbindungsgabeln 29 in Seitenansicht gesehen kleiner ausgeführt als eine Gabelweite der sich gegenüber liegenden Gabelschenkel 12.

Die Verbindung des elastischen Kupplungselementes 7 mit dem Verbindungselement 29 erfolgt hierbei direkt an dem Basissteg 17. Die axiale Freigängigkeit wird durch dem elastischen Kupplungselement 7 zugeordnete runde, aufgesetzte Anschraubaugen 31 erreicht, weswegen vorteilhaft auf eine der Konturierung der Verbindungsgabeln 14 entsprechende Konturierung der Verbindungsgabeln 29 verzichtet werden kann.

In den Figuren 3 und 4 können die Verbindungselemente 9 prinzipiell auch um 180° in den Lagern 13 gedreht gegen das elastische Kupplungselement 7 befestigt betrieben werden, was zusätzliche Einstellungsoptionen bei dem elastischen Kupplungselement 7 mit unterschiedlicher axialer Steifigkeit bei Zug- und Druckbelastung ermöglicht. In der dargestellten Position ergeben sich aufgrund der verketteten Anordnung der jeweiligen Gelenkgabel 2 mit der zugeordneten Verbindungsgabel 29 Vorteile hinsichtlich eines Fail-Safe-Verhaltens, da bei Ausfall des elastischen Kupplungselementes 7 die räumliche Zuordnung der Verbindungsgabel 29 zur zugeordneten Gelenkgabel 2 erhalten bleibt.

Ansonsten entspricht das Ausführungsbeispiel nach den Figuren 3 und 4 dem Ausführungsbeispiel nach den Figuren 1 und 2.

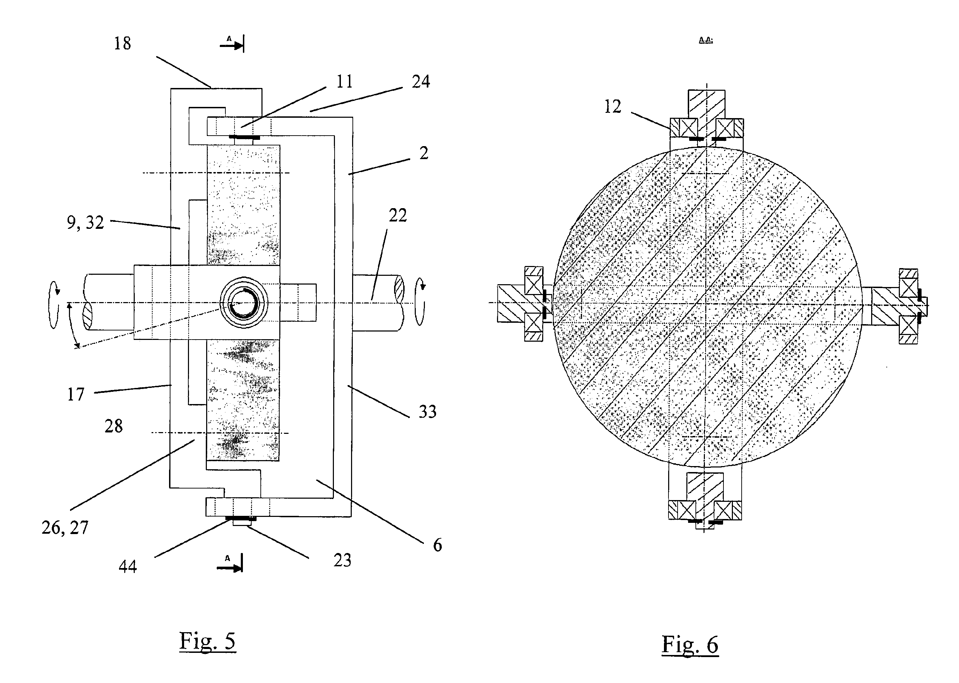

Eine dritte vorteilhafte Ausgestaltung des erfindungsgemäßen Kardangelenks 1 ist in den Figuren 5 und 6 dargestellt.

Bei diesem Ausführungsbeispiel greifen die Zapfen 11 bezogen auf die Gelenkmittelachse 22 gleichsinnig in die zugeordnete Gelenkgabel 2 bzw. in die darin angeordneten Lager 13 ein.

Die Verbindungselemente 9 sind als zusätzliche Verbindungsgabel 32 unterschiedlich zu den Ausführungen der Beispiele zu den Figuren 1 bis 4 ausgeführt.

Die Verbindungsgabel 32 weist den Basissteg 17 auf, an dem jeweils endseitig der Quersteg 18 angeordnet, dem der Zapfenabschnitt 19 mit dem Zapfen 11 zugeordnet ist. Die Zapfen 11 erstrecken sich mit ihrem freien Ende 23 gleich orientiert, wobei je einer der Zapfen 11 zur Gelenkmittelachse 22 hin orientiert und der andere von dieser weg orientiert ist. Einer der Zapfen 11, und zwar der Zapfen 11, der sich mit seinem freien Ende 23 zur Gelenkmittelachse hin erstreckt, greift mit seinem freien Ende 23 von der Außenseite 24 zum Innenraum 6 orientiert in das Lager 13 ein, wobei der dazu gegenüberliegende Zapfen 11, also der Zapfen 11, der sich mit seinem freien Ende 23 von der Gelenkmittelachse 22 weg erstreckt, von dem Innenraum 6 zur Außenseite 24 orientiert in das Lager 13 eingreift. Die Zapfen 11 der gleichen Verbindungsgabel 29 greifen demnach wechselseitig in die Lager 13 ein. Zum einen liegt der Zapfenabschnitt 19 an der zur Außenseite 24 weisenden Seite des Lagers 13 an. Zum anderen liegt der dazu gegenüberliegende Zapfenabschnitt 19 an der zum Innenraum 6 weisenden Seite des Lagers 13 an. Demnach ist die Verbindungsgabel 29 wechselseitig und zwar einmal gabelaußenseitig und einmal gabelinnenseitig anliegend gelagert.

Um diese wechselseitige Lagerung zu erreichen, weist die Verbindungsgabel 32 einen Basissteg 17 auf, der bezogen auf die Gelenkmittelachse 22 unterschiedlich beabstandete Querstege 18 aufweist, so daß die gegenüberliegend angeordneten Querstege 18 zum einen außenseitig und zum anderen innenseitig angeordnet sind. Bei dem in Figur 5 dargestellten Ausführungsbeispiel weist der Basissteg 17 einen Längenbetrag auf, der dem Längenbetrag des Basissteges 33 der Gelenkgabel entspricht. Allerdings sind die Gelenkgabeln 2 zu den jeweils zugeordneten Verbindungsgabeln 29 bezogen auf die Gelenkmittelachse 22 unterschiedlich viel radial im Kardangelenk 1 verschoben.

Zur Verbindung der Verbindungselemente 32 mit dem elastischen Kupplungselement 7 sind wie zu dem Ausführungsbeispiel nach Figur 1 und 2 Verbindungsbereiche 26 bzw. die Fortsätze 27 vorgesehen.

Das elastische Kupplungselement 7 nach den Ausführungsbeispielen der Figuren 3 bis 6 ist wiederum bevorzugt als torsionssteife, biege-elastische bzw. axial elastische Scheibe, vorzugsweise als Hardy-Scheibe ausgestaltet, und in dem Innenraum 6 angeordnet. Selbstverständlich kann das elastische Kupplungselement 7 aber auch als torsionssteifer, biege-elastischer bzw. axial elastischer Ring bzw. Kreisring ausgeführt und in dem Innenraum 6 angeordnet sein. Die zusätzlichen Verbindungsgabeln 14, 29, 32 sind in der Seitenansicht gesehen im Wesentlichen U-förmig wie die Gelenkgabeln 2 mit Ihren Gabelschenkeln 12 ausgestaltet.

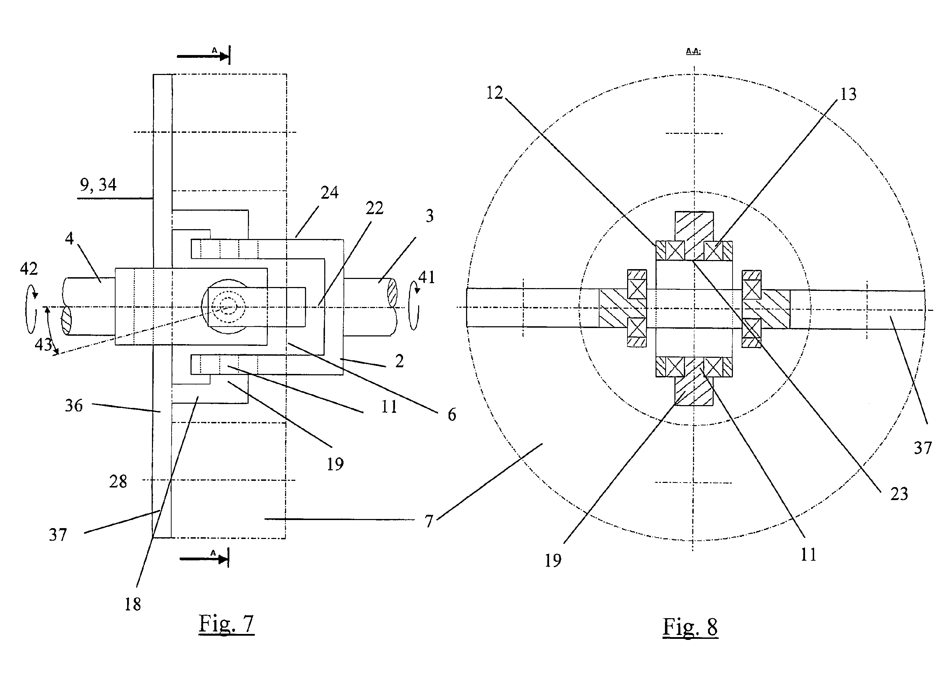

Ein viertes Ausführungsbeispiel des erfindungsgemäßen Kardangelenks 1 ist in den Figuren 7 und 8 dargestellt.

Bei diesem Ausführungsbeispiel greifen die Zapfen 11, wie zu dem Ausführungsbeispiel nach den Figuren 1 und 2 beschrieben, bezogen auf die Symmetrieachse 22 gegensinnig in die zugeordnete Gelenkgabel 2 bzw. in die darin angeordneten Lager 13 ein.

Die Verbindungselemente 9 sind als zusätzliche Verbindungsgabeln 34 mit einem Basissteg 36 ausgeführt, der die Querstege 18 mit jeweils einem von der Symmetrieachse 22 weggerichteten Kragen 37 überragt. In der Seitenansicht (Figur 7) gesehen ist die jeweilige Verbindungsgabel 34 quasi dem griechischen Buchstaben Pi entsprechend ausgestaltet, wobei die Querstege 18 parallele Pi-Schenkel außerhalb der Gelenkgabeln 2 bzw. deren Gabelschenkeln 12 bilden.

Die Zapfen 11 sind, wie bei dem Ausführungsbeispiel nach den Figuren 1 und 2, mit ihrem freien Ende 23 von der dem Innenraum 6 gegenüberliegenden Außenseite 24 zum Innenraum 6 orientiert. Der Zapfenabschnitt 19 und somit der Zapfen 11 ist bezogen auf die Symmetrieachse 22 außenseitig an den Gelenkgabeln 2 bzw. deren Gabelschenkeln 12 angeordnet, wobei der Zapfenabschnitt 19 an der zur Außenseite 23 weisenden Seite der Lager 13 anliegt. Der Quersteg 18 umgreift die Gabelschenkel 12, so daß der Zapfen 11 von der Außenseite 24 in die Lager 13 eingreifen kann.

Das elastische Kupplungselement 7 ist als torsionssteifer, biege-elastischer bzw. axial elastischer Ring bzw. Kreisring um die Außenseiten 24 der Gelenkgabeln 2 bzw. deren Gabelschenkel 12 geführt und mit dem Kragen 37 verbunden. Das elastische Kupplungselement 7 besteht bevorzugt aus einem Gummi, weswegen als Verbindung eine Schraub-, Niet- oder dergleichen Verbindung gewählt werden kann. Möglich ist auch eine Vulkanisation.

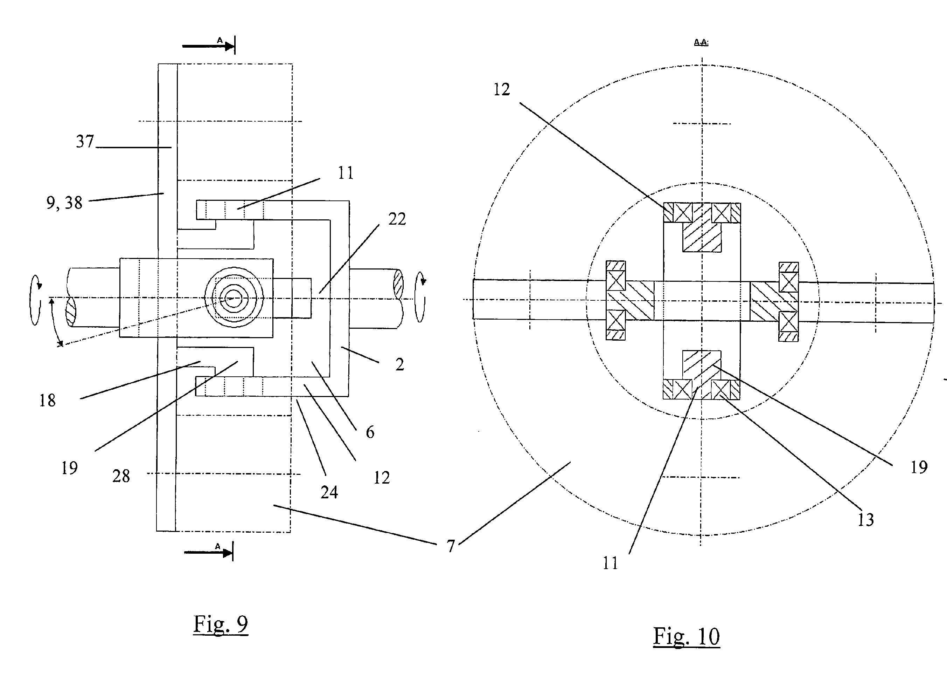

Ein fünftes Ausführungsbeispiel des erfindungsgemäßen Kardangelenks 1 ist in den Figuren 9 und 10 dargestellt. Im Unterschied zu dem in den Figuren 7 und 8 beschriebenem Ausführungsbeispiel greifen die Zapfen 11 mit ihrem freien Ende 23 von dem Innenraum 6 zu der dem Innenraum 6 gegenüberliegenden Außenseite 24 orientiert in die Gabelschenkel 12 bzw. in die darin aufgenommenen Lager 13 ein, wie zu dem Ausführungsbeispiel nach den Figuren 3 und 4 beschrieben. Die Zapfen 11 greifen, wie zu dem Ausführungsbeispiel gemäß den Figuren 7 und 8 bezogen auf die Symmetrieachse 22 gegensinnig in das jeweils zugeordnete Lager 13 ein.

Die Verbindungselemente 9 sind als zusätzliche Verbindungsgabeln 38 mit dem Basissteg 36 ausgeführt In der Seitenansicht gesehen ist die jeweilige Verbindungsgabel 38 quasi dem griechischen Buchstaben Pi entsprechend ausgestaltet, wobei die Querstege 18 parallele Pi-Schenkel innerhalb der Gelenkgabeln 2 bzw. deren Gabelschenkeln 12 bilden.

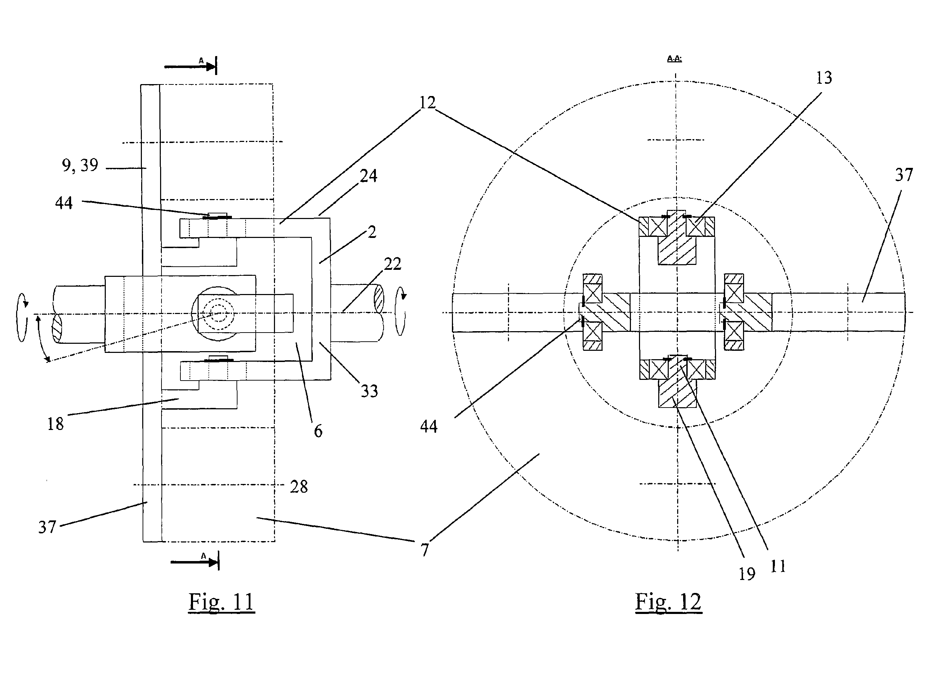

Ein sechstes Ausführungsbeispiel des erfindungsgemäßen Kardangelenks 1 ist in den Figuren 11 und 12 dargestellt. Die Verbindungselemente 9 sind als zusätzliche Verbindungsgabel 39 unterschiedlich zu den Ausführungen der Beispiele zu den Figuren 7 bis 10 ausgeführt. Auch sind die Gelenkgabeln 2 im Gegensatz zu den Figuren 7 bis 10 exzentrisch zu Gelenkmittelachse 22 angeordnet.

Die Verbindungsgabel 39 weist den Basissteg 36 auf, an dem jeweils der Quersteg 18 angeordnet, dem der Zapfenabschnitt 19 mit dem Zapfen 11 zugeordnet ist. An dem Basissteg 36 sind wiederum die Kragen 37 angeordnet. Die Zapfen 11 erstrecken sich mit ihrem freien Ende 23 gleich orientiert zum einen zur Gelenkmittelachse 22 hin und zum anderen von dieser weg. Einer der Zapfen 11 der sich mit seinem freien Ende 23 zur Gelenkmittelachse 22 hin erstreckt, greift mit seinem freien Ende 23 von der Außenseite 24 zum Innenraum 6 orientiert in das Lager 13 ein, wobei der dazu gegenüberliegende Zapfen 11 der sich mit seinem freien Ende 23 von der Gelenkmittelachse 22 weg erstreckt, von dem Innenraum 6 zur Außenseite 24 orientiert in das Lager 13 eingreift. Die Zapfen 11 der gleichen Verbindungsgabel 39 greifen demnach wechselseitig in die Lager 13 ein. Zum einen liegt der Zapfenabschnitt 19 an der zur Außenseite 24 weisenden Seite des Lagers 13 an. Zum anderen liegt der dazu gegenüberliegende Zapfenabschnitt 19 an der zum Innenraum 6 weisenden Seite des Lagers 13 an. Demnach ist die Verbindungsgabel 39 wechselseitig und zwar einmal außenseitig und einmal innenseitig gelagert.

Um diese wechselseitige Lagerung zu erreichen, weist die Verbindungsgabel 39 den Basissteg 36 auf, der bezogen auf die Gelenkmittelachse 22 unterschiedlich beabstandete Querstege 18 aufweist, so daß die gegenüberliegend angeordneten Querstege 18 zum einen außenseitig und zum anderen innenseitig angeordnet sind. Bei dem in Figur 11 dargestellten Ausführungsbeispiel weist der Basissteg 36 einen Längenbetrag auf, der dem Längenbetrag des Basissteges 33 der Gelenkgabel entspricht. Allerdings sind die Gelenkgabeln 2 zu den jeweils zugeordneten Verbindungsgabeln 39 bezogen auf die Gelenkmittelachse 22 axial entgegengesetzt verschoben.

Das elastische Kupplungselement 7 ist in den Ausführungsbeispielen nach den Figuren 9 bis 12 wiederum wie bereits zu dem Ausführungsbeispiel nach den Figuren 7 und 8 beschrieben, als torsionssteifer, biege-elastischer bzw. axial elastischer Ring bzw. Kreisring ausgestaltet, der um die Außenseiten 24 der Gelenkgabeln 2 bzw. deren Gabelschenkel 12 geführt ist. Das elastische Kupplungselement 7 ist jeweils mit dem bezogen auf die Gelenkmittelachse 22 beidseitig angeordneten Kragen 37 verbunden. Als Verbindung kann eine Schraubverbindung, Nietverbindung oder eine Vulkanisierung vorgesehen sein.

In dem Kardangelenk 1 nach den Ausführungsbeispielen der Figuren 1 bis 12 wird ein Eingangsmoment (Drehrichtung 41) über die angetriebene Welle 3 (Antriebswelle) über die Gelenkgabel 2 auf das in ihr drehbar gelagerte Verbindungselementenpaar 8 bzw. die jeweils in den gegenüberliegenden Gabelschenkeln 12 gelagerten Verbindungselemente 9,14,29,32,34,38,39 und von dort auf das elastische Kupplungselement 7 als Zug-/Druckspannung an die jeweils kreuzenden Verbindungselemente 9,14,29,32,34,38,39 und dann weiter auf die Gelenkgabel 2 der anzutreibenden Welle 4 bzw. Abtriebswelle übertragen. Dies ist mittels des zum Eingangsmoment (Drehrichtung 41) gleichsinnigen Ausgangsmoments (Drehrichtung 42) dargestellt. Das elastische Kupplungselement 7 ist hinsichtlich der geringfügig erforderlichen Biegesteifigkeit derart gewählt, daß sichergestellt wird, daß eine Drehung des Verbindungselementes 9,14,29,32,34,38,39 bzw. dessen Zapfens 21 bei Neigung (Inklination 43) und Rotation der Gelenkgabel 2 stattfinden kann, um ein Reibungsmoment gemäß der gewählten Lagerluft in den Lagern 13 zu überwinden. In axialer Richtung erlaubt das elastische Kupplungselement 7 so eine Nachgiebigkeit, die zur Isolation genutzt werden kann, während die Kontur des elastischen Kupplungselementes 7 eine hohe Drehsteifigkeit bereitstellt.

Vorteilhafter Weise kann das Kardangelenk 1 bei einer Ausgestaltung nach dem Figuren 7 bis 12 mit einem als Ring ausgestalteten elastischen Kupplungselement 7 kleiner ausgeführt werden als bei einer Ausgestaltung nach dem Beispiel zu den Figuren 1 bis 6, wobei eine axiale Flexibilität bei gleicher Rotationssteifigkeit vergrößert werden kann.

Das in den Figuren 1 bis 12 dargestellte Kardangelenk 1 eignet sich insbesondere zur Verwendung in einer Lenksäule eines Kraftfahrzeuges. Die Wellen 3 bzw. 4 sind zueinander gefluchtet dargestellt. Im Fahrzeug liegt üblicherweise eine zueinander abgewinkelte Position vor, wobei das Kardangelenk die Drehübertragung aufrechterhält. Die abgewinkelte Position ist in den Figuren 1 und 3 mittels des Inklinationswinkels 43 dargestellt.

Des Weiteren ist in den Figuren 5, 6, 11 und 12 ein Sicherungselement 44 vorgesehen, das dem jeweils freien Ende 23 des Zapfens 11 zugeordnet sein kann. Das Sicherungselement 44 kann beispielsweise als Wellensicherungsring ausgeführt sein. Zur Lagerung des Sicherungselementes 44 an dem Zapfen 11 kann eine Nut an geeigneter Stelle in den Zapfen 11 eingebracht sein. Selbstverständlich kann auch bei allen Ausführungsbeispielen ein derartiges Sicherungselement 44 vorgesehen sein.

## Patentansprüche

1. Kardangelenk, das zwei Gelenkgabeln (2) aufweist, wobei eine der Gelenkgabeln (2) mit einer angetriebenen Welle (3) bzw. Antriebswelle und die andere Gelenkgabel (2) mit einer anzutreibenden Welle (4) bzw. Abtriebswelle verbindbar bzw. verbunden ist, und wobei die beiden Gelenkgabeln (2) um 90° radial verdreht zueinander angeordnet sind, so daß die beiden Gelenkgabeln (2) einen Innenraum (6) bilden, und wobei dem Kardangelenk (1) ein elastisches Kupplungselement (7) zugeordnet ist,
**dadurch gekennzeichnet, daß**
den Gelenkgabeln (2) ein Verbindungselementenpaar (8) zugeordnet ist, das aus zwei einander identischen, räumlich getrennten, als Verbindungsgabeln (14,29,32,34,38,39) ausgeführten Verbindungselementen (9) gebildet ist, die einen Basissteg (17,36) und an diesem angeordnete Querschenkel (18) aufweisen, die in einen Zapfenabschnitt (19) übergehen, die einen Zapfen (11) tragen, wobei die Verbindungsgabeln (14,29,32,34,38,39) mit ihrem jeweiligen Zapfen (11) in den jeweils zugeordneten Gelenkgabeln (2) bzw. in deren Gabelschenkel (12) in Lagern (13) eingreifen und drehbar gelagert sind, und wobei die jeweiligen Verbindungsgabeln (14,29,32,34,38,39) über das elastische Kupplungselement (7) miteinander verbunden sind.

2. Kardangelenk nach Anspruch 1,
**dadurch gekennzeichnet, daß**
die Zapfen (11) einer jeden Verbindungsgabel (14,29,34,38) bezogen auf eine Gelenkmittelachse (22) jeweils gegensinnig in die zugeordneten Gelenkgabeln (2) bzw. in die darin angeordneten Lager (13) eingreifen.

3. Kardangelenk nach Anspruch 1 oder 2,
**dadurch gekennzeichnet, daß**
die Zapfen (11) mit ihrem freien Ende (23) von dem Innenraum (6) zu einer dem Innenraum (6) gegenüberliegenden Außenseite (24) der Gabelschenkel (12) orientiert in die Gabelschenkel (12) bzw. in die darin angeordneten Lager (13) eingreifen.

4. Kardangelenk nach Anspruch 1 oder 2,
**dadurch gekennzeichnet, daß**
die Zapfen (11) mit ihrem freien Ende (23) von einer zum Innenraum (6) gegenübediegenden Außenseite (24) der Gabelschenkel (12) zum Innenraum (6) orientiert in die Gabelschenkel (12) bzw. in die darin angeordneten Lager (13) eingreifen.

5. Kardangelenk nach Anspruch 1,
**dadurch gekennzeichnet, daß**
die Zapfen (11) einer jeden Verbindungsgabel (32,39) bezogen auf eine Gelenkmittelachse (22) jeweils gleichsinnig in die zugeordneten Gelenkgabeln (2) bzw. in die darin angeordneten Lager (13) eingreifen

6. Kardangelenk nach Anspruch 5,
**dadurch gekennzeichnet, daß**
einer der Zapfen (11) mit seinem freien Ende (23) bezogen auf die Gelenkmittelachse (22) von einer zum Innenraum (6) gegenüberliegenden Außenseite (24) der Gabelschenkel (12) zum Innenraum (6) orientiert in den zugeordneten Gabelschenkel (12) bzw. dem darin angeordneten Lager (13) eingreift, wobei der der gleichen Verbindungsgabel (32,39) dazu gegenüberliegende Zapfen (11) mit seinem freien Ende (23) von dem Innenraum (6) zur Außenseite (24) orientiert in den Gabelschenkel (12) bzw. dem darin angeordneten Lager (13) eingreift.

7. Kardangelenk nach Anspruch 5 oder 6,
**dadurch gekennzeichnet, daß**
Gelenkgabeln (2) mit ihren Gabelschenkeln (12) bezogen auf die Gelenkmittelachse (22) unterschiedlich beabstandet sind.

8. Kardangelenk nach einem der vorhergehenden Ansprüche,
**dadurch gekennzeichnet, daß**
das elastische Kupplungselement (7) als torsionssteife, biege-elastische bzw. axial elastische Scheibe in dem Innenraum (6) angeordnet ist.

9. Kardangelenk nach einem der Ansprüche 1 bis 7,
**dadurch gekennzeichnet, daß**
das elastische Kupplungselement (7) als torsionssteifer, biege-elastischer bzw. axial elastischer Ring ausgestaltet ist, und um die Außenseiten (24) der Gelenkgabeln (2) geführt ist.

10. Kardangelenk nach einem der vorhergehenden Ansprüche,
**dadurch gekennzeichnet, daß**
das elastische Kupplungselement (7) mit den Verbindungsgabeln (14,29,32,34,38,39) beispielsweise mittels einer Verschraubung, Vernietung, Vulkanisierung oder dergleichen verbunden ist.

## Claims

1. Cardanic joint which has two joint forks (2), one of the joint forks (2) being connectable or connected to a driven shaft (3) or drive shaft and the other joint fork (2) being connectable or connected to a shaft (4) which is to be driven or output shaft, and the two joint forks (2) being arranged in a manner which is rotated radially by 90° with respect to one another, with the result that the two joint forks (2) form an inner space (6), and the cardanic joint (1) being assigned an elastic coupling element (7), **characterized in that** the joint forks (2) are assigned a connecting-element pair (8) which is formed from two mutually identical, spatially separated connecting elements (9) which are configured as connecting forks (14, 29, 32, 34, 38, 39) and have a base web (17, 36) and transverse limbs (18) which are arranged on the latter and merge into a journal section (19), which connecting forks (14, 29, 32, 34, 38, 39) carry a journal (11), the connecting forks (14, 29, 32, 34, 38, 39) engaging with their respective journal (11) in the respectively assigned joint forks (2) or in their fork limbs (12) into bearings (13) and being mounted rotatably in them, and the respective connecting forks (14, 29, 32, 34, 38, 39) being connected to one another via the elastic coupling element (7).

2. Cardanic joint according to Claim 1, **characterized in that** the journals (11) of each connecting fork (14, 29, 34, 38) engage into the associated joint forks (2) or into the bearings (13) which are arranged in the latter, in each case in the opposite direction in relation to a joint centre axis (22).

3. Cardanic joint according to Claim 1 or 2, **characterized in that** the journals (11) engage with their free end (23) into the fork limbs (12) or into the bearings which are arranged in the latter, in a manner which is oriented from the inner space (6) to an outer side (24) of the fork limbs (12) which lies opposite the inner space (6).

4. Cardanic joint according to Claim 1 or 2, **characterized in that** the journals (11) engage with their free end (23) into the fork limbs (12) or into the bearings (13) which are arranged in the latter, in a manner which is oriented from an outer side (24) of the fork limbs (12) which lies opposite the inner space (6) to the inner space (6).

5. Cardanic joint according to Claim 1, **characterized in that** the journals (11) of each connecting fork (32, 39) engage into the associated joint forks (2) or into the bearings (13) which are arranged in the latter, in each case in the opposite direction in relation to a joint centre axis (22).

6. Cardanic joint according to Claim 5, **characterized in that** one of the journals (11) engages with its free end (23) into the associated fork limb (12) or the bearing (13) which is arranged in the latter, in a manner which is oriented from an outer side (24) of the fork limbs (12) which lies opposite the inner space (6) to the inner space (6), in relation to the joint centre axis (22).

7. Cardanic joint according to Claim 5 or 6, **characterized in that** joint forks (2) are spaced apart with their fork limbs (12) to a different extent in relation to the joint centre axis (22).

8. Cardanic joint according to one of the preceding claims, **characterized in that** the elastic coupling element (7) is arranged in the inner space (6) as a torsion-stiff, flexo-elastic or axial-elastic disc.

9. Cardanic joint according to one of Claims 1 to 7, **characterized in that** the elastic coupling element (7) is designed as a torsion-stiff, flexo-elastic or axial-elastic ring and is guided around the outer sides (24) of the joint forks (2).

10. Cardanic joint according to one of the preceding claims, **characterized in that** the elastic coupling element (7) is connected to the connecting forks (14, 29, 32, 34, 38, 39), for example, by means of a screw connection, riveting, vulcanization or the like.

## Revendications

1. Joint universel, qui présente deux fourchettes de joint (2), l'une des fourchettes de joint (2) étant connectée ou pouvant être connectée à un arbre entraîné (3) ou un arbre d'entraînement et l'autre fourchette de joint (2) étant connectée ou pouvant être connectée à un arbre à entraîner (4) ou un arbre de sortie, et les deux fourchettes de joint (2) étant disposées de manière tournée radialement de 90° l'une par rapport à l'autre, de sorte que les deux fourchettes de joint (2) forment un espace interne (6), un élément d'accouplement élastique (7) étant associé au joint universel (1),
**caractérisé en ce que**
l'on associe aux fourchettes de joint (2) une paire d'éléments de connexion (8), qui est formée de deux éléments de connexion (9) identiques l'un à l'autre, séparés physiquement, et réalisés sous forme de fourchettes de connexion (14, 29, 32, 34, 38, 39), qui présentent une partie de base (17, 36) et des branches transversales (18) disposées sur celle-ci, qui se prolongent par une portion de tourillon (19) qui porte un tourillon (11), les fourchettes de connexion (14, 29, 32, 34, 38, 39) venant en prise et sont montées à rotation avec leur tourillon respectif (11) dans les fourchettes de joint (2) respectivement associées ou dans leurs branches de fourchette (12), dans des paliers (13), les fourchettes de connexion respectives (14, 29, 32, 34, 38, 39) étant connectées mutuellement par le biais de l'élément d'accouplement élastique (7).

2. Joint universel selon la revendication 1,
**caractérisé en ce que**
les tourillons (11) de chaque fourchette de connexion (14, 29, 34, 38), viennent en prise, par rapport à un axe médian du joint (22), à chaque fois en sens contraire dans les fourchettes de joint associées (2) ou dans les paliers (13) disposés dedans.

3. Joint universel selon la revendication 1 ou 2,
**caractérisé en ce que**
les tourillons (11) viennent en prise avec leur extrémité libre (23) de manière orientée depuis l'espace interne (6) vers un côté extérieur (24) de la branche de fourchette (12) opposé à l'espace interne (6) dans les branches de fourchette (12) ou dans les paliers (13) disposés dedans.

4. Joint universel selon la revendication 1 ou 2,
**caractérisé en ce que**
les tourillons (11) viennent en prise avec leur extrémité libre (23) de manière orientée depuis un côté extérieur (24) de la branche de fourchette (12) opposé à l'espace interne (6) vers l'espace interne (6), dans les branches de fourchette (12) ou dans les paliers (13) disposés dedans.

5. Joint universel selon la revendication 1,
**caractérisé en ce que**
les tourillons (11) de chaque fourchette de connexion (32, 39) viennent en prise, par rapport à un axe médian du joint (22), à chaque fois dans le même sens dans les fourchettes de joint associées (2) ou dans les paliers (13) disposés dedans.

6. Joint universel selon la revendication 5,
**caractérisé en ce que**
l'un des tourillons (11) vient en prise, avec son extrémité libre (23), par rapport à un axe médian du joint (22), de manière orientée depuis un côté extérieur (24) de la branche de fourchette (12) opposé à l'espace interne (6) vers l'espace interne (6), dans la branche de fourchette (12) associée ou dans le palier (13) disposé dedans, et le tourillon (11) opposé à la même fourchette de connexion (32, 39) vient en prise avec son extrémité libre (23), de manière orientée depuis l'espace interne (6) vers le côté extérieur (24), dans la branche de fourchette (12) ou dans le palier (13) disposé dedans.

7. Joint universel selon la revendication 5 ou 6,
**caractérisé en ce que**
les fourchettes de joint (2) avec leurs branches de fourchettes (12) sont espacées différemment par rapport à l'axe médian du joint (22).

8. Joint universel selon l'une quelconque des revendications précédentes,
**caractérisé en ce que**
l'élément d'accouplement élastique (7) est disposé dans l'espace interne (6) sous forme de disque rigide en torsion, flexible élastiquement ou axialement élastique.

9. Joint universel selon l'une quelconque des revendications 1 à 7,
**caractérisé en ce que**
l'élément d'accouplement élastique (7) est configuré sous forme de bague rigide en torsion, flexible élastiquement ou axialement élastique, et est guidé autour des côtés extérieurs (24) des fourchettes de joint (2).

10. Joint universel selon l'une quelconque des revendications précédentes,
**caractérisé en ce que**
l'élément d'accouplement élastique (7) est connecté aux fourchettes de connexion (14, 29, 32, 34, 38, 39) par exemple au moyen d'un vissage, d'un rivetage, d'une vulcanisation ou similaire.
